# EUROPEAN PATENT APPLICATION

(11) **EP 2 627 120 A1**
(43) Date of publication of application: **14.08.2013**
(21) Application number: 11830762.8
(22) Date of filing: 07.10.2011
(51) Int. Cl.: H04W 36/00, H04W 36/14, H04W 84/10, H04W 88/06, H04W 88/12

(54) **NETWORK APPARATUS, BASE STATION AND MOBILE STATION CONTROL METHOD**

(30) Priority: 07.10.2010 JP 2010227616
(71) Applicant: NTT DOCOMO, INC., Chiyoda-ku Tokyo 100-6150 (JP)
(72) Inventor: AOYAGI, Kenichiro, Tokyo 100-6150 (JP); TAKAGI, Yukiko, Tokyo 100-6150 (JP); NAKAMURA, Yuichiro, Tokyo 100-6150 (JP); OKAMOTO, Takeshi, Tokyo 100-6150 (JP)
(74) Representative: HOFFMANN EITLE
(86) International application number: PCT/JP2011/073178
(87) International publication number: WO 2012/046831

(57) **Abstract**

To achieve a transition of a mobile station to any one of neighboring cells while suppressing the increase of processing load related to a neighboring cell information table even when a number of base stations are present in the neighborhood of the mobile station. A RNC 210 includes a NRT storage unit 211 configured to store information on the neighboring cells of a mobile station 301 in a NRT based on the transition of the mobile station 301 from a LTE system 10 to a 3G system 20, and a mobile station control unit 213 configured to return the mobile station 301 from the 3G system 20 to the LTE system 10 based on the information on the neighboring cells stored in the NRT. The NRT storage unit 211 stores a timing to erase the information on the neighboring cells of the mobile station 301 from the NRT.

## Description

### TECHNICAL FIELD

The present invention relates to a network device, a base station, and a mobile station control method for controlling a transition of a mobile station accessible with multiple radio communication systems.

### BACKGROUND ART

For a mobile station accessible with multiple radio communication systems such as a 3G (Wideband-CDMA) system (hereinafter, 3G) and a Long Term Evolution system (hereinafter, LTE), various methods (Inter-RAT mobility) of controlling the mobile station between the radio communication systems have been specified.

For example, it is specified that when a mobile station present in an LTE transmits a connection request for a CS call using a circuit-switched network (CS domain), the mobile station falls back to the CS domain in the 3G (CSFB) and executes call originating processing in the 3G to which the mobile station executed the fallback (see Non-patent Document 1).

Also, the number of small-sized base stations, each of which is installed in a home or the like by a user of a mobile station, such as a femtocell, have been recently increased (see, for example, Non-patent document 2).

When the small-sized base stations form a CSG (Closed Subscriber Group)/Hybrid cell to which only a previously permitted mobile station can make an access, the mobile station given access to the CSG/Hybrid cell can autonomously search for the CSG/Hybrid cell and execute handover to the CSG/Hybrid cell.

### PRIOR ART DOCUMENT

### NON-PATENT DOCUMENT

Non-patent Document 1: 3GPP TS 24.301, Technical Specification Group Core Network and Terminals; Non-Access-Stratum (NAS) protocol for Evolved Packet System (EPS); Stage 3
Non-patent Document 2: 3GPP TS 22.220, Service requirements for Home NodeBs (UMTS) and Home eNodeBs (LTE)

### SUMMARY OF THE INVENTION

By the way, in some cases, a mobile station may be preferably transitioned to a macro cell formed by a general base station for public communications which is installed by a mobile communications carrier, in view of the traffic distribution. The macro cell is a so-called open-type cell which can be accessed by a large indefinite number of mobile stations.

Moreover, it is conceivable that, even when the mobile station does not have a function to autonomously search for a CSG/Hybrid cell, the mobile station is transitioned to a specific CSG/Hybrid cell and is provided with a specific communication service in the CSG/Hybrid cell to which the mobile station is transitioned.

In order to manage mobility of the mobile station, network devices such as a RNC (Radio Network Controller) and a SGSN (Serving GPRS Support Node) need to manage a neighboring cell information table (Neighbor Relation Table: NRT) of the mobile station.

However, there is a problem that, in an area (an apartment building, etc.) concentrated with small cells formed by small-sized base stations which can be freely installed by users, the number of cells included in the neighboring cell information table is enormous, and processing load on the network devices increases considerably.

In view of the above circumstances, an objective of the present invention is to provide a network device, a base station, and a mobile station control method that are capable of achieving a transition of a mobile station to any one of neighboring cells while suppressing the increase of processing load related to a neighboring cell information table even when a number of base stations are present in the neighborhood of the mobile station.

A first feature of the present invention is a network device (RNC 210) configured to control mobility of a mobile station (mobile station 301) accessible with at least one of a first radio communication system (LTE system 10) and a second radio communication system (3G system 20) different from the first radio communication system, the network device including: a storage unit (NRT storage unit 211) configured to store information on neighboring cells of the mobile station in a neighboring cell information table (NRT 500) based on a transition of the mobile station from the first radio communication system to the second radio communication system, and a mobile station control unit (mobile station control unit 213) configured to control movement of the mobile station from the second radio communication system to the first radio communication system based on the information on the neighboring cells which is stored in the neighboring cell information table, in which the storage unit stores a timing to erase the information on the neighboring cells of the mobile station from the neighboring cell information table.

In the above-described feature of the present invention, the storage unit may include at least one of an effective time period of each of the neighboring cells and an effective area where an application of the information on each neighboring cell is effective.

In the above-described feature of the present invention, the storage unit may erase the information on the neighboring cells of the mobile station from the neighboring cell information table when a predetermined time period is elapsed after storing the information on the neighboring cells of the mobile station in the neighboring cell information table.

A second feature of the present invention is a base station configured to control mobility of a mobile station accessible with at least one of a first radio communication system and a second radio communication system different from the first radio communication system, the base station including: a storage unit configured to store information on neighboring cells of the mobile station in a neighboring cell information table based on a transition of the mobile station from the first radio communication system to the second radio communication system, and a mobile station control unit configured to control movement of the mobile station from the second radio communication system to the first radio communication system based on the information on the neighboring cells which is stored in the neighboring cell information table, in which the storage unit stores a timing to erase the information on the neighboring cells of the mobile station from the neighboring cell information table.

A third feature of the present invention is a mobile station control method for controlling mobility of a mobile station accessible with at least one of a first radio communication system and a second radio communication system different from the first radio communication system, the method including the steps of: storing information on neighboring cells of the mobile station in a neighboring cell information table based on a transition of the mobile station from the first radio communication system to the second radio communication system, controlling movement of the mobile station from the second radio communication system to the first radio communication system based on the information on the neighboring cells which is stored in the neighboring cell information table, and storing a timing to erase the information on the neighboring cells of the mobile station from the neighboring cell information table.

### BRIEF DESCRIPTION OF DRAWINGS

[Fig. 1] Fig. 1 is an overall schematic configuration diagram of a radio communication system according to an embodiment of the present invention.
[Fig. 2] Fig. 2 shows a functional block configuration of a RNC 210 according to the embodiment of the present invention.
[Fig. 3] Fig. 3 is a drawing showing a communication sequence of a radio communication system according to the embodiment of the present invention.
[Fig. 4] Fig. 4 is a diagram showing an example of a NRT 500 according to the embodiment of the present invention.

### MODES FOR CARRYING OUT THE INVENTION

Hereinafter, embodiments of the present invention are described. Note that, in the following description of the drawings, same or similar reference numerals denote same or similar elements and portions. In addition, it should be noted that the drawings are schematic and ratios of dimensions and the like are different from actual ones.

Therefore, specific dimensions and the like should be determined in consideration of the following description. Moreover, the drawings also include portions having different dimensional relationships and ratios from each other.

### (1) Overall Schematic Configuration of Radio Communication System

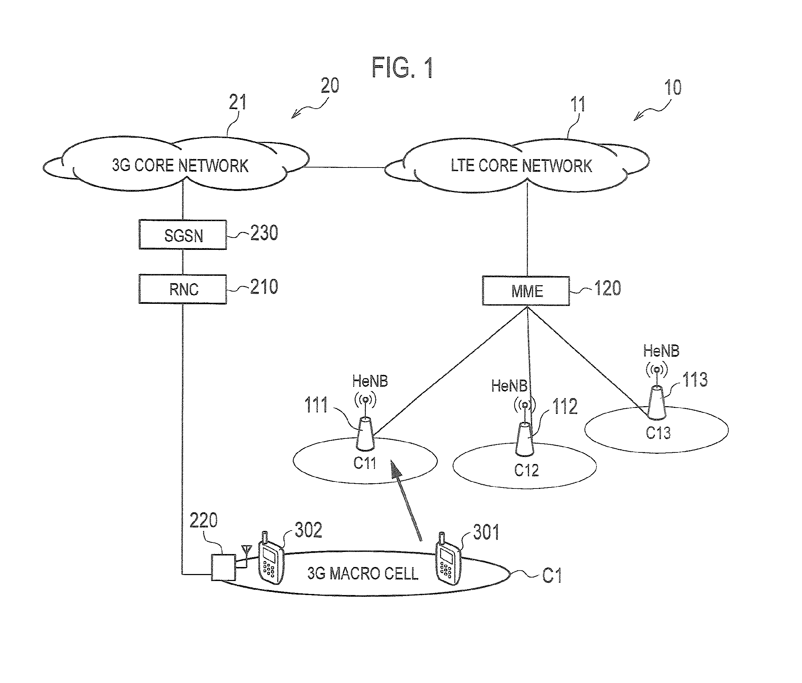

Fig. 1 is an overall schematic configuration diagram of a radio communication system according to this embodiment. As shown in Fig. 1, the radio communication system according to the embodiment includes a LTE system 10 and a 3G system 20.

The LTE system 10 is a radio communication system conforming to the LTE scheme. The 3G system 20 is a radio communication system conforming to the 3G scheme (W-CDMA). In other words, the LTE system 10 and the 3G system 20 use different radio access technologies (RAT).

The LTE system 10 (first radio communication system) includes a LTE core network 11, HeNBs 111 to 113, and an MME 120 (Mobility Management Entity). The 3G system 20 (second radio communication system) includes a 3G core network 21, a RNC 210, a BTS 220, and a SGSN 230 (Serving GPRS Support Node).

The mobile stations 301, 302 can be connected by radio with the LTE system 10 and the 3G system 20. Specifically, the mobile stations 301, 302 execute radio communications with the HeNBs 111 to 113 and are connected with the LTE system 10. Moreover, the mobile stations 301, 302 execute radio communications with the BTS 220 and are connected with the 3G system 20.

The HeNBs 111 to 113 are small-sized base stations which can be installed by users and the like of the mobile stations 301, 302, and the HeNBs 111 to 113 form cells C11 to C13, respectively. In addition, the BTS 220 is a general base station for public communications which is installed by a mobile communications carrier, and forms a macro cell C1.

### (2) Functional Block Configuration of Radio Communication System

Hereinafter, the functional block configuration of the RNC 210 among the devices configuring the radio communication system is described. The RNC 210 is included in network devices which control transition of the mobile stations 301, 302 between the LTE system 10 and the 3G system 20.

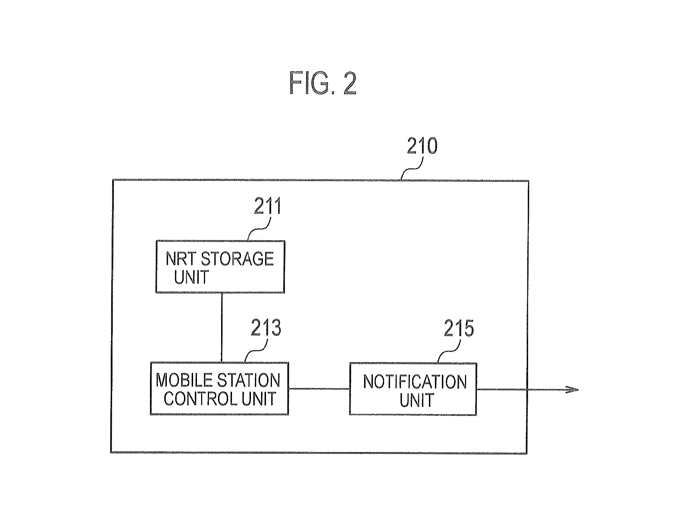

Fig. 2 shows a functional block configuration of the RNC 210. As shown in Fig. 2, the RNC 210 includes a NRT storage unit 211, a mobile station control unit 213, and a notification unit 215.

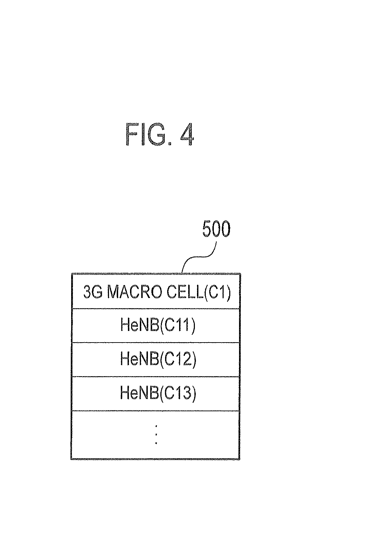

The NRT storage unit 211 stores a neighboring cell information table 500 (see Fig. 4, and hereinafter, NRT 500) including information on cells formed in the neighborhood of the mobile station 301 (302, the same hereinafter). Specifically, the NRT storage unit 211 acquires information on the neighboring cells of the mobile station through the MME 120 and the SGSN 230, for example, the information held by the HeNBs 111 to 113. The NRT storage unit 211 stores the acquired information.

The NRT storage unit 211 stores the information on the neighboring cells of the mobile station 301 in the NRT 500 based on the transition of the mobile station 301 from the LTE system 10 to the 3G system 20. Moreover, the NRT storage unit 211 stores a timing to erase the information on the neighboring cells of the mobile station 301 from the NRT500.

Note that the transition from the LTE system 10 to the 3G system 20 is, for example, the PS HANDOVER and a Redirection procedure associated with a CSFB from the LTE system 10 to the 3G system 20. The timing at which the NRT storage unit 211 stores the information on the neighboring cells after the determination of the transition of the mobile station 301 from the LTE system 10 to the 3G system 20 may be any one of, before the transition of the mobile station 301 to the 3G system 20, during the transition, and after the transition. Alternatively, the timing may be after the transition to the LTE system 10.

The NRT storage unit 211 stores the information on the neighboring cells which is necessary for the mobile station 301 fallen back to the 3G system 20 to return from the 3G system 20 to the LTE system 10. Specifically, the NRT storage unit 211 stores information elements (IEs) such as Cell Identity, PCI, and frequency information on cells C11 to C13. Note that the information elements may include Cause of S1AP and an IE such as Subscriber Profile ID specifying a radio communication system (RAT) which stands by temporarily and preferentially.

In addition, the NRT storage unit 211 can include, as information on the neighboring cells, an effective time period of each of the neighboring cells and/or an effective area where an application of the information on each neighboring cell is effective.

The "effective time period" is a time period in which the neighboring cell is effective as a transition destination candidate. For example, if an access of at least one mobile station to any one of the HeNBs is detected, a time period of 10 minutes after the detection of the access is expected as a time period in which the mobile station may move again to the HeNB.

The "effective area" is a geographical region where the neighboring cells are selected as candidates of another cell to which the mobile station 301 is transitioned. For example, if an access of one mobile station to the HeNB is detected, information on the HeNB accessed by the mobile station is reflected in the NRT 500 of the cell which belongs to the area where the access to the HeNB is expected, based on positional information on the HeNB.

The NRT storage unit 211 erases the information on the neighboring cells of the mobile station 301 from the NRT 500 when the mobile station 301 returns from the 3G system 20 to the LTE system 10. Alternatively, the NRT storage unit 211 may erase the information on the neighboring cells of the mobile station 301 from the NRT 500 when a predetermined time period (e.g., 10 minutes) is elapsed after the NRT storage unit 211 has stored the information on the neighboring cells of the mobile station 301 in the NRT 500.

Moreover, the NRT storage unit 211 may erase the information on the neighboring cells of the mobile station 301 from the NRT 500 when the mobile station 301 moves to any one of predetermined cells (cells C11 to C13 under the control of the LTE system 10). In other words, the NRT storage unit 211 stores the information on the neighboring cells of the mobile station 301 until the mobile station moves to the predetermined cell.

The mobile station control unit 213 controls mobility of the mobile station 301. Specifically, the mobile station control unit 213 controls movement of the mobile station 301 from the 3G system 20 to the LTE system 10 based on the information on the neighboring cells stored in the NRT 500. More specifically, the mobile station control unit 213 controls transition of the mobile station 301 from the LTE system 10 to the 3G system 20 and transition from the 3G system 20 to the LTE system 10 (including return after fallback).

Particularly, the mobile station control unit 213 generates control information used to return the mobile station 301 from the 3G system 20 to the LTE system 10 based on the information on the neighboring cells stored in the NRT 500.

The notification unit 215 notifies the mobile station 301 and the mobile station 302 of the control information generated by the mobile station control unit 213 based on the information on the neighboring cells, through the BTS 220.

### (3) Operation of Radio Communication System

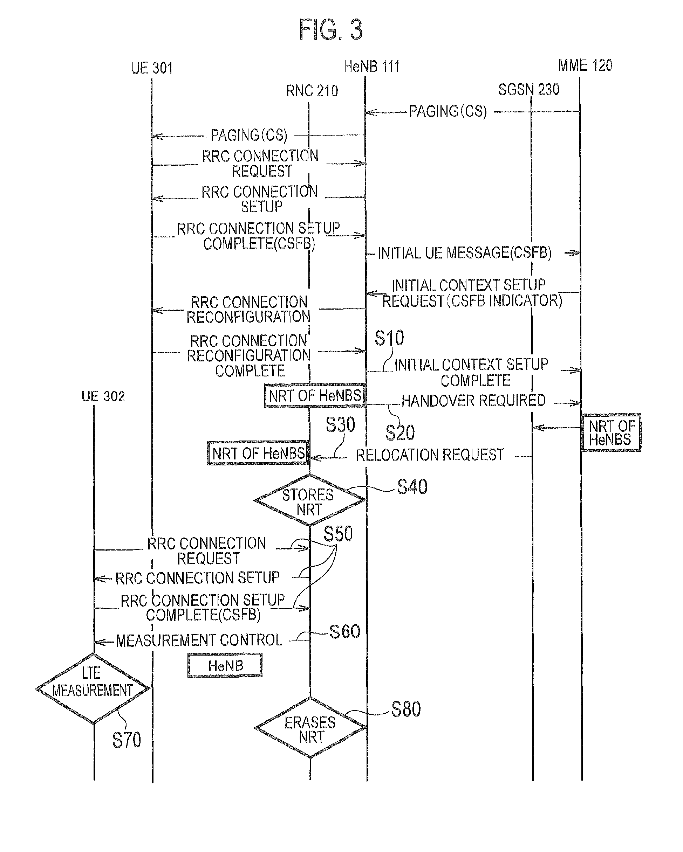

Hereinafter, an operation of the above-mentioned radio communication system is described referring to Figs. 3 and 4. Fig. 3 shows a communication sequence of the radio communication system according to this embodiment. Here, the mobile station 301 (UE301) is connected with the LTE system 10 via the HeNB 111.

In this state, when there is an incoming voice call for the mobile station 301, the MME 120 notifies the HeNB 111 of the execution of the CSFB to the 3G system 20 at a timing of receiving a PAGING signal for the mobile station 301.

In the procedure of transition of the mobile station 301 to the 3G system 20 (Inter-RAT HANDOVER), when the CSFB is initiated, the HeNB 111 notifies the MME 120 of information (NRT of HeNBs in Fig. 3) necessary to temporarily make effective the return of the mobile station 301 to any one of the HeNBs 111 to 113, namely, the information elements (IEs) such as Cell Identity, PCI, and the frequency information on the cells C11 to C13. In addition, the MME 120 relays the information elements to the RNC 210 (step S10 to S30).

The RNC 210 stores the information (NRT of the HeNBs) relayed by the MME 120 (step S40). In this embodiment, at a timing of emergence of necessity of the transition of the mobile station 301 from the HeNB 111 to the 3G system 20, the mobile station 301 notifies the macro cell C1 of the information which is managed in the HeNB and is needed to control the movement of the mobile station 301 to the HeNB 111, and makes the RNC 210 temporarily manage the notified information. Making the RNC 210 temporarily manage the information in the above manner reduces processing load on the RNC 210 caused by managing the NRT of HeNBs.

Fig. 4 shows an example of the NRT 500. AS shown in Fig. 4, the NRT 500 includes the information on the neighboring cells (cells C11 to C13) of the mobile station 301, which is relayed by the MME 120, in addition to the information on the C1.

Moreover, the RNC 210 can treat the information (NRT of HeNBs) in the same way as other NRTs as long as the RNC 210 stores the information (NRT of HeNBs) related to the mobile station 301, which is relayed by the MME 120. Thus, the RNC 210 can execute mobility control such as a handover of another mobile station (mobile station 302) based on the information (step S50, S60). In other words, the mobile station 302 can transition to the LTE system 10 based on the control (step S70).

The RNC 210 erases the information when a predetermined time period (e.g., 10 minutes) is elapsed after storing the information on the neighboring cells of the mobile station 301 in the NRT 500 (step S80). Note that, as described above, the RNC 210 may erase the information on neighboring cells of the mobile station from the NRT 500 when the mobile station 301 returns to the 3G system 20.

### (4) Advantageous Effects

As described above, in a mobile communication system according to this embodiment, the information on the neighboring cells of the mobile station 301 is stored in the NRT 500 based on the transition of the mobile station 301 from the LTE system 10 to the 3G system 20. Moreover, the information on the neighboring cells of the mobile station 301 is erased from the NRT 500 when the mobile station 301 returns to the 3G system 20 (or when a predetermined time period is elapsed after the information is stored in the NRT 500).

Accordingly, the return of the mobile station 301 to any one of the neighboring cells (cells C11 to C13) can be achieved while suppressing the increase of the processing load related to the NRT 500 even when a number of base stations are present in the neighborhood of the mobile station 301.

In other words, in this embodiment, the 3G system 20 (RNC 210) can guide the mobile station 301 to any one of the cells formed by the HeNBs 111 to 113 while avoiding the load of constantly managing the NRT of the HeNBs 111 to 113.

In this embodiment, the information on the neighboring cells can include the effective time period of each of the neighboring cells and/or the effective area where the application of the information on each neighboring cell is effective. Accordingly, the cell to which the mobile station 301 is to return can be controlled more precisely.

### (5) Other Embodiments

As described above, the details of the present invention have been disclosed by using the embodiment of the present invention. However, it should not be understood that the description and drawings which constitute part of this disclosure limit the present invention. From this disclosure, various alternative embodiments, examples, and operation techniques will be easily found by those skilled in the art.

As described above, the procedure of the CSFB from the LTE system 10 to the 3G system 20 may be the Redirection to the 3G system 20 or the PS HANDOVER.

In the above-described embodiment, the HeNB 111 notifies the MME 120 of the information on the neighboring cells and the MME 120 relays the information to the RNC 210. However, the HeNB 111 may directly notify the RNC 210 of the information or may relay the information to the RNC 210 via another device (For example, SGSN230).

In addition, in the above-described embodiment, the RNC 210 stores the NRT 500 and controls the mobility of the mobile station 301. However, the functions of the NRT storage unit 211 and the mobile station control unit 213 may be included in the MME 120 or the BTS 220.

Moreover, the present invention may be applied to mobility control between HeNBs in the LTE system 10 and/or mobility control between a HomeNodeB (HNB) and the BTS in the 3G system 20.

As described above, the present invention naturally includes various embodiments which are not described herein. Accordingly, the technical scope of the present invention should be determined only by the matters to define the invention in the scope of claims regarded as appropriate based on the description.

Note that the entire content of Japanese Patent Application No. 2010-227616 (filed on October 7, 2010) is incorporated herein by reference.

### INDUSTRIAL APPLICABILITY

The characteristics of the present invention can provide a network device, a base station, and a mobile station control method that are capable of achieving a transition of a mobile station to any one of neighboring cells while suppressing the increase of processing load related to a neighboring cell information table even when a number of base stations are present in the neighborhood of the mobile station.

### EXPLANATION OF THE REFERENCE NUMERALS

10... LTE system
11... LTE core network
20... 3G system
21... 3G core network
111 to 113... HeNB
120... MME
210... RNC
211... NRT storage unit
213... mobile station control unit
215... notification unit
220... BTS
230... SGSN
301, 302... mobile station
500... neighboring cell information table (NRT)

## Claims

1. A network device configured to control mobility of a mobile station accessible with at least one of a first radio communication system and a second radio communication system different from the first radio communication system, the network device comprising:
a storage unit configured to store information on neighboring cells of the mobile station in a neighboring cell information table based on a transition of the mobile station from the first radio communication system to the second radio communication system; and
a mobile station control unit configured to control movement of the mobile station from the second radio communication system to the first radio communication system based on the information on the neighboring cells which is stored in the neighboring cell information table, wherein
the storage unit stores a timing to erase the information on the neighboring cells of the mobile station from the neighboring cell information table.

2. The network device according to claim 1, wherein the storage unit includes at least one of an effective time period of each of the neighboring cells and an effective area where an application of the information on each neighboring cell is effective.

3. The network device according to claim 1, wherein the storage unit erases the information on the neighboring cells of the mobile station from the neighboring cell information table when a predetermined time period is elapsed after storing the information on the neighboring cells of the mobile station in the neighboring cell information table.

4. A base station configured to control mobility of a mobile station accessible with at least one of a first radio communication system and a second radio communication system different from the first radio communication system, the base station comprising:
a storage unit configured to store information on neighboring cells of the mobile station in a neighboring cell information table based on a transition of the mobile station from the first radio communication system to the second radio communication system; and
a mobile station control unit configured to control movement of the mobile station from the second radio communication system to the first radio communication system based on the information on the neighboring cells which is stored in the neighboring cell information table, wherein
the storage unit stores a timing to erase the information on the neighboring cells of the mobile station from the neighboring cell information table.

5. A mobile station control method for controlling mobility of a mobile station accessible with at least one of a first radio communication system and a second radio communication system different from the first radio communication system, the method comprising the steps of:
storing information on neighboring cells of the mobile station in a neighboring cell information table based on a transition of the mobile station from the first radio communication system to the second radio communication system;
controlling movement of the mobile station from the second radio communication system to the first radio communication system based on the information on the neighboring cells which is stored in the neighboring cell information table; and
storing a timing to erase the information on the neighboring cells of the mobile station from the neighboring cell information table.
